# EUROPÄISCHE PATENTSCHRIFT

(11) **EP 1 208 674 B1**
(45) Veröffentlichungstag und Bekanntmachung des Hinweises auf die Patenterteilung: **04.10.2006**
(21) Anmeldenummer: 00962212.7
(22) Anmeldetag: 08.08.2000
(51) Int. Cl.: H04L 12/28, H04Q 3/00, H04Q 7/22, H04Q 7/38

(54) **VERFAHREN ZUR NUTZUNG VON DURCH EIN KOMMUNIKATIONSNETZ BEREITGESTELLTEN TEILNEHMERBEZOGENEN WIRKNETZINFORMATIONEN IN MEHRWERT- ODER INTERNETDIENSTEN**
METHOD FOR USING ACTIVE-SUBSCRIBER NETWORK INFORMATION GENERATED THROUGH A COMMUNICATION NETWORK FOR ADDED VALUE OR INTERNET SERVICES
PROCEDE DESTINE A L'UTILISATION D'INFORMATIONS DE RESEAU ACTIF RELATIVES A L'ABONNE, FOURNIES PAR UN RESEAU DE COMMUNICATION, DANS DES SERVICES A VALEUR AJOUTEE OU DES SERVICES INTERNET

(30) Priorität: 09.08.1999 DE 19936783
(43) Veröffentlichungstag der Anmeldung: 29.05.2002
(73) Patentinhaber: T-Mobile Deutschland GmbH, 53227 Bonn (DE)
(72) Erfinder: BRUNE, Peter, 53340 Meckenheim (DE); FEUSER, Ulrike, 53173 Bonn (DE); LJUNGSTRÖM, Patrik, 53639 Königswinter (DE); MICHEL, Uwe, 53604 Bad Honnef (DE); MOHRS, Walter, 53123 Bonn (DE); PTACEK, Wolfgang, 53604 Bad Honnef (DE)
(74) Vertreter: Riebling, Peter
(86) Internationale Anmeldenummer: PCT/DE2000/002692
(87) Internationale Veröffentlichungsnummer: WO 2001/011482

(56) Entgegenhaltungen:
- EP-A- 0 924 914
- WO-A-99/05877
- WO-A-99/33291
- DE-A- 19 724 969
- US-A- 5 839 076
- BICKMORE T W ET AL: "Digestor: device-independent access to the World Wide Web" COMPUTER NETWORKS AND ISDN SYSTEMS,NL,NORTH HOLLAND PUBLISHING. AMSTERDAM, Bd. 29, Nr. 8-13, 1. September 1997 (1997-09-01), Seiten 1075-1082, XP004095305 ISSN: 0169-7552

## Beschreibung

Die Erfindung betrifft Verfahren zur Nutzung von durch ein Kommunikationsnetz bereitgestellten teilnehmerbezogenen Wirknetzinformationen in Mehrwert- oder Internetdiensten nach dem Oberbegriff des Patentanspruchs 1.

Seit einiger Zeit werden in den Mobilfunknetzen im Bereich sprachgestützte Mehrwertdienste Angebote mit ortsbezug realisiert, d.h. der Mobilfunkteilnehmer kann Informationen abfragen, die abhängig von seinem Aufenthaltsort aufbereitet werden. Als Beispiel können hier Verkehrsansagen, Taxiruf etc. genannt werden. Die hierfür notwendigen netz- und protokollseitigen Voraussetzungen sind Stand der Technik und z.B. in der DE 197 24.969 A1 offenbart. Hier erfolgt z.B. eine Übertragung der Identität der Funkzelle (Cell-ID bzw. LocationNumber), in der sich der Teilnehmer gerade aufhält als eigener Parameter im ISDN User Part (ISUP). Diese Ortsinformation wird umcodiert und den Dienstleistern zur Verfügung gestellt. Vorteilhaft kann die Umwertung z.B. in einem Dienstesteuerungspunkt (SCP/SMP) einer Intelligenten Netzstruktur erfolgen.

Die EP 0 915 590 A2 betrifft ein Verfahren zur Herstellung einer sicheren und authentisierten Kommunikationsverbindung zwischen einem Server und einem Client in einem drahtlosen Kommunikationsnetzwerk. Es wird ein Verfahren vorgeschlagen, das insbesondere mobilen Kommunikationsendgeräten einen schnellen und unkomplizierten Verbindungsaufbau zu einem Server ermöglicht. Zur Herstellung der sicheren Verbindung werden zwischen dem Client-Endgerät und dem Server verschiedene Schlüssel und Authentifikationsnachrichten ausgetauscht, wobei die entsprechenden zu dieser Verbindung gehörenden Datenpakete beim Server als auch beim Client anhand einer Identifikationsnummer (Session ID) identifiziert werden. Die Verwendung einer Session ID ist allgemein bekannt und wird z.B. auch beim Transmission Control Protocol / Internet Protocol (TCP/IP) verwendet.

Für die vor der Einführung stehenden mobilen Internet-Dienste, u.a. mit direktem Internet Protokoll (IP) oder Wireless Application Protocol, WAP-Zugang ist die Nutzung von Ortsinformationen in dem Diensteablauf bisher nicht möglich. Dies rührt daher, daß die im mobilen Kommunikationsnetz bereitgestellen Ortsinformationen nicht ohne weiteres in die Protokollstruktur von Mehrwert- oder Internetdiensten übernommen werden können.

Die Aufgabe der Erfindung besteht darin, Verfahren zur Nutzung von durch ein Kommunikationsnetz bereitgestellten teilnehmerbezogenen Wirknetzinformationen in Mehrwert- oder Internetdiensten vorzuschlagen, die sowohl in Festnetzen als auch in Mobilfunknetzen angewendet werden können.

Diese Aufgabe wird durch die in dem Patentanspruch 1 angegebenen Merkmale gelöst.

Eine Ausführung der Erfindung gemäß Anspruch 1 sieht ein Verfahren vor, bei dem in einem geeigneten Netzknoten des Kommunikationsnetzes eine Umwertung aller relevanten Wirknetzinformationen in geeignete Parameter der rufbezogenen Protokolle, z.B. ISUP und D-Kanal-Protokoll, sowie der in den Mehrwert- oder Internetdiensten verwendeten Protokolle erfolgt, wobei die Parameter entweder als Extension der Zielrufnummer oder als Datenpaket transparent an einen Zugangsknoten für Mehrwert- oder Internetdienste und von dort zum Datenbankserver übertragen werden, wobei im Datenbankserver in Verbindung mit der Rufnummer des Teilnehmers permanent teilnehmerbezogene Daten jeglicher Art gespeichert werden, die beim Aufbau einer Verbindung zu Mehrwert- oder Internetdiensten der teilnehmerbezogenen Adresse zugeteilt werden. Dieses Verfahren kann vorzugsweise angewandt werden, wenn nur wenige Wirknetzinformationen übertragen werden müssen beziehungsweise für die Übertragung größerer Datenmengen.

Beim Rufaufbau zwischen dem Teilnehmer und einem Mehrwert- oder Internetdienst wird eine den teilnehmerbezogenen Wirknetzinformationen zugeordnete Transaktions ID vergeben und die teilnehmerbezogenen Wirknetzinformationen werden von einem Knoten des Kommunikationsnetzes zusammen mit der Transaktions ID zum Datenbankserver übertragen oder von diesem anhand der Transaktions ID vom Netzknoten angefordert. Es erfolgt also eine Art indirekte Übertragung der Wirknetzinformationen anhand der Transaktions ID.

Die Transaktions ID wird zum einen als Extension der Zielrufnummer oder als separates Datenpaket an einen Zugangsknoten für Mehrwert- oder Internetdienste und von dort zum Datenbankserver übertragen.

Werden die Wirknetzinformationen vom Datenbankserver selbst angefordert, so ist es erforderlich, daß die Wirknetzinformationen in dem Netzknoten des Kommunikationsnetzes zusammen mit der Transaktions ID temporär zwischengespeichert werden, solange bis der Datenbankserver die Informationen abgeholt hat.

Die Gesamtarchitektur der Verbindung eines Kommunikationsnetzes mit Mehrwert- oder Internetdiensten wird um einen Datenbankserver, bei Nutzung von Internetdiensten vorzugsweise ein erweiterter Radius-Server, mit Zugriffsmöglichkeit für ausgewählte oder beliebige Mehrwertdienste- oder Internet-Applikationsserver ergänzt. Der Zugriff kann beispielsweise via X.500 oder LDAP erfolgen und erlaubt dem Applikationsserver Informationen, beispielsweise eine Ortsinformation oder eine im GSM-Netz authentifizierte Identität etc., die zu einer IP-Adresse gespeichert sind, abzufragen und in der Applikation zu verwenden. Bei der für die Abfrage verwendeten Adresse handelt es sich z.B. um die Internet (IP)-Adresse des Teilnehmers der die Anwendung initiiert hat. Die IP-Adresse wird dabei dem Teilnehmer typischerweise nur temporär für die Dauer der IP-Verbindung zugeteilt.

In dem Datenbankserver werden für jede aufgebaute bzw. existierende IP-Verbindung vorzugsweise eine Zuordnung von IP-Adresse, MSISDN, d.h. die Rufnummer/Identität des mobilen Anrufers, und sonstige Wirknetzinformationen, z.B. der Aufenthaltsort des mobilen Anrufers, gehalten.

Dabei wird für die Population des Datenbankservers für die IP-Adresse und die MSISDN die übliche IP-Adress-Vergabe via Radius-Protokollen verwendet.

Die Wirknetzinformationen können vorzugsweise eine Ortsinformation über den Aufenthaltsort des Teilnehmers enthalten, so daß der Teilnehmer vom Mehrwert- oder Internetdienst auf Wunsch nur regional relevante Informationen zugespielt bekommt. Vorteilhaft enthalten die Wirknetzinformationen ferner Informationen über die Identität und Authentizität des Teilnehmers enthalten, was z.B. bei Bankgeschäften über Internet eine erhöhte Sicherheit bietet.

Anhand einer Erfassung der durch die Mehrwert- oder Internetdienste erfolgten zugriffe auf den Datenbankserver kann eine Gebührenerhebung bei den einzelnen erfassten Mehrwert- oder Internetdiensten erfolgen. Die Abfragemöglichkeit des Datenbankservers kann sowohl von netzinternen Applikationen als auch von Applikationen Dritter Parteien erfolgen. Durch die Verwendung geeigneter Methoden (z.B. IP-Tunnel) kann die Abfragemöglichkeit intern und extern selektiv seitens des Netzbetreibers erlaubt werden. Eine solche kontrollierte Freischaltung erlaubt auch eine Erfassungen der Abfragen im Datenbankserver und damit auch die Möglichkeit der Abrechnung gegenüber einer Dritten Partei entweder pauschal und/oder nach Nutzung.

Nachfolgend wird die Erfindung anhand mehrerer Ausführungsbeispiele unter Bezugnahme auf die Zeichnungsfiguren näher erläutert. Aus den Zeichnungen und ihrer Beschreibung gehen weitere Merkmale und Vorteile der Erfindung hervor. Es zeigen:
- Figur 1:: ein Blockdiagramm einer ersten möglichen Netzarchitektur für die Durchführung des erfindungsgemäßen Verfahrens;
- Figur 2:: ein Blockdiagramm einer zweiten möglichen Netzarchitektur für die Durchführung des erfindungsgemäßen Verfahrens.

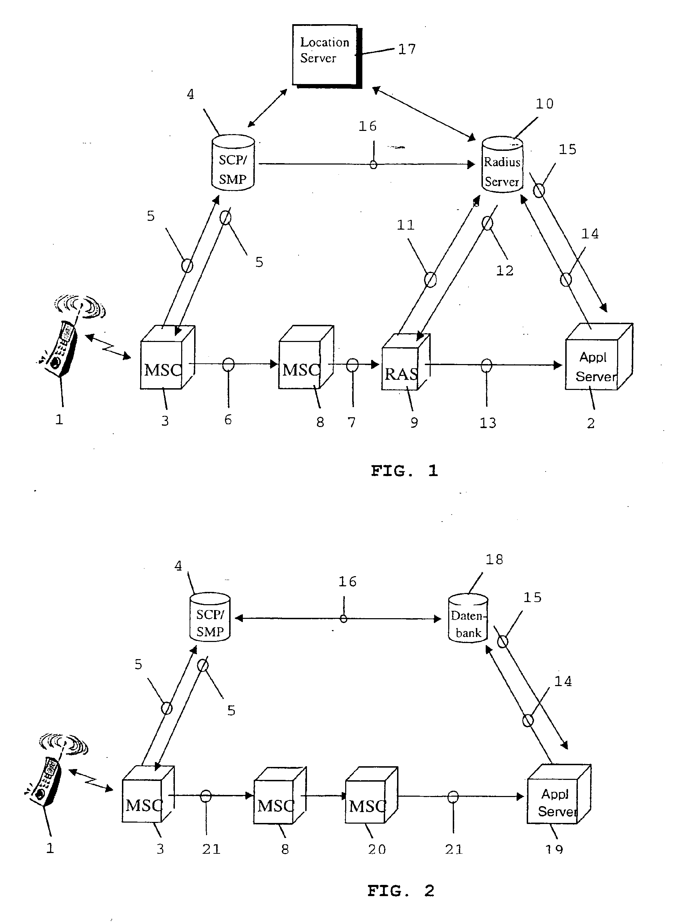

Gemäß Figur 1 möchte ein Teilnehmer eines Mobilfunknetzes über sein Endgerät 1 eine Verbindung zu einem Internetdienst 2 aufbauen. Die zuständige Mobilvermittlungsstelle 3 erkennt dies und stellt intern alle teilnehmerbezogenen Wirknetzinformationen einem bestimmten Netzknoten, z.B. einem Dienstesteuerungspunkt 4 (SCP/SMP) des Intelligenten Netzes zur Verfügung 5. Im Dienstesteuerungspunkt 4 erfolgt eine Umwertung aller relevanten Wirknetzinformationen in geeignete Parameter der rufbezogenen Protokolle, z.B. ISUP und D-Kanal-Protokoll sowie des Radius-Protokolls.
Sofern es sich um wenige Informationen handelt, kann hierfür ein geeigneter, vorhandener Parameter, z.B. als Extension der Zielrufnummer verwendet/mißbraucht werden. Die Zielrufnummer mit Extension wird vom SCP 4 zur Mobilvermittlung 3 übertragen 5, und es erfolgt ein Rufaufbau 6,7 über eine weiter Vermittlung 8 zu einem Zugangsknoten für Internetdienste, z.B. einen Random Access Server 9, über den eine Internet-Protokoll (IP) Verbindung zum Applikationsserver 2 aufgebaut werden soll.

In bekannter weise ist ein Radius-Server 10 vorgesehen, der hauptsächlich für die temporäre Zuteilung einer IP-Adresse zum Endgerät 1 des Teilnehmers zuständig ist. Ist die Rufzustellung beim Random Access Server 9 angelangt, so erfolgt eine Anfrage 11 der IP-Adresse beim Radius-Server 10 und es erfolgt ferner eine Bereitstellung der Wirknetzinformationen via Radius Protokoll. Der Radius-Server 10 vergibt die IP-Adresse 12 an den Teilnehmer und übermittelt diese dazu an den Random Access Server 9. Ferner speichert der Radius-Server 10 die Wirknetzinformationen zusammen mit der MSISDN und IP-Adresse des Teilnehmers temporär ab.

Schließlich erfolgt der Aufbau der IP-Verbindung 13 zwischen Endgerät 1 und Applikationsserver 2 anhand der zugeteilten IP-Adresse, wobei der Applikationsserver 2 z.B. via X.500 oder LDAP 14 die zur IP-Adresse gespeicherten Wirknetzinformationen beim Radius-Server 10 abfragen kann, der diese dann für die Verwendung in der Internet-Applikation 2 zur Verfügung stellt 16.

Wenn es sich bei den Wirknetzinformationen um größere Datenmengen handelt, bietet sich die Einführung eines eigenen "Datencontainers" für die Datenübermittlung über das Telekommunikationsnetz an, der transparent im Mobilfunknetz, z.B. via ISUP und D-Kanal zum Random Access Server 9 und von dort via Radius-Protokoll zum Radius-Server 10 übertragen wird.

Abweichend vom oben genannten Vorschlag kann statt der Umwertung der Wirknetzinformationen im SCP 4 eine Transaktions ID vergeben werden, die beim Rufaufbau - wie oben beschrieben - vom SCP 4 über die Vermittlungsstellen 3,8, den Random Access Server 9 zum Radius-Server 10 übertragen wird. Die eigentliche Wirknetzinformation wird vom SCP 4 bereitgestellt und kann anschließend per push-Methode zusammen mit der Transaktions ID zum Radius-Server übertragen werden 15, z.B. via E-Mail. Alternativ dazu kann der Radius-Server 10 bei Bedarf die Wirknetzinformation per pull-Methode beim SCP 4, d.h. am Ort der Umwandlung / der Transaktions ID Vergabe, abfragen, z.B. via X.500 oder LDAP. Im zweiten Fall muß die relevante Information im SCP 4 temporär zwischengespeichert werden, solange bis sie zum Radius-Server 10 übertragen wurde. In beiden Fällen kann die Umwertung / Transaktions_ID in dem SCP/SMP erfolgen.

Da die Wirknetzinformationen teilweise auch netzinterne Daten, z.B. Cell_ID, beinhalten, die für außenstehende Diensteanbieter nicht geeignet sind, ist eine Aufbereitung, z.B. im SCP/SMP 4 oder in Radius-Server 10 sinnvoll. So kann z.B. die Cell_ID in geographische Koordinaten, eine Postleitzahl oder Telefonortsnetzkennzahl umgewandelt werden.

Eine Weiterbildung der Erfindung sieht die Ergänzung der im Radius-Server 10 gehaltenen Wirknetzinformationen um statische Daten vor. In dem Radius-Server 10 werden statisch zu (jeder) MSISDN eines Teilnehmers Daten gespeichert, die ebenfalls von einer Internet-Applikation 2 während einer IP-Verbindung abgefragt werden können. Dabei kann es sich z.B. um Vertragsdaten des Mobilfunkteilnehmer, wie Name, Anschrift, Alter, Geschlecht, Bankverbindung etc., handeln, die durch den Netzbetreiber in den Radius-Server 10 eingebracht werden und/oder um Daten die der Mobilfunkteilnehmer selbst {authentisch) eingebracht hat und/oder um Daten, die die Anwendungen liefern. Dabei sind die Datenschutzrichtlinien zu beachten.

Die Wirknetzdaten können insbesondere Ortsinformatioen über den derzeitigen Aufenthaltsort des Teilnehmers beinhalten. Dabei wurde für die Ortsinformation von der bekannten Verwendung der Cell_ID ausgegangen. Im Rahmen der Mobilfunkstandardisierung wird heute jedoch die Einführung von Techniken spezifiziert, die weitaus genauere Ortsangaben erlauben werden (z.B. Uplink Time Of Arrival,TOA, Enhanced Observe Time Differenz. E-OTD. Assisted Global Positioning System, GPS). Gemeinsam für diese Techniken ist, daß die ermittelte Ortsinformation in einem Server 17 (Location-Server) zur Verfügung steht und von dort
- bei Bedarf abgefragt werden kann
- bei jedem Gesprächsaufbau abgefragt wird
- bei bestimmten Gesprächen weitergegeben wird
- bei allen Gesprächen weitergegeben wird

Auch diese genauere Ortsinformation kann selbstverständlich im Rahmen der Erfindung verwendet werden. Möglich ist sowohl eine Verbindung des Location-Servers 17 mit dem SCP/SMP 4, beispielhaft für den Ort der Umwandlung aller Wirknetzinformationen, als auch mit dem Radius-Server 10. In beiden Fällen kann die Informationsübermittlung entweder per Abfrage (z.B. via X.500, LDAP) oder per Versendung (z.B. eMail) erfolgen.

Das oben beschriebene Konzept lässt sich wie in Figur 2 dargestellt insbesondere auch für sprachgestützte Mehrwertdienste innerhalb eines Kommunikationsnetzes anwenden. Im Bereich sprachgestützter Mehrwertdienste werden bereits heute Angebote mit Ortsbezug realisiert, wobei es jedoch nicht möglich war, weitere Informationen über den Teilnehmer abzufragen. Die Möglichkeit sonstige Informationen im Rahmen der Mehrwertdienste zu verwenden, kann ebenfalls durch Abfrage einer Datenbank 17, analog zum Radius-Server 10 im Internetumfeld, erfolgen. Voraussetzung hierfür ist die Generierung und Übermittlung einer oben beschriebenen Transaktions_ID zur Mehrwertdienstanwendung 18, z.B. als Extension in der Zielrufnummer. Dazu wird zwischen Teilnehmer 1 und Mehrwertdienst 19 über Vermittlungsstellen 20 eine reguläre Kommunikationsverbindung 21 aufgebaut.

Die in Figur 2 dargestellte Architektur ist nur als Beispiel zu verstehen, so kann selbstverständlich die Funktion der Datenbank 18 in den SCP/SMP 4 integriert werden.

## Patentansprüche

1. Verfahren zur Nutzung von durch ein Kommunikationsnetz bereitgestellten teilnehmerbezogenen Wirknetzinformationen in Mehrwert- oder Internetdiensten, bei dem die Wirknetzinformationen in einem sowohl mit dem Kommunikationsnetz als auch mit Mehrwert- oder Internetdiensten (2; 19) kommunizierenden Datenbankserver (10; 18) unter einer teilnehmerbezogenen Adresse abgelegt werden und von den Mehrwert- oder Internetdiensten (2; 19) unter dieser Adresse abgefragt werden können,
**dadurch gekennzeichnet,**
**daß** in einem Netzknoten (4) des Kommunikationsnetzes eine Umwertung von Wirknetzinformationen in Parameter der rufbezogenen Protokolle sowie der in den Mehrwert- oder Internetdiensten verwendeten Protokolle erfolgt,
wobei die Parameter entweder als Extension der Zielrufnummer oder als Datenpakete transparent
an einen Zugangsknoten (9; 20) für Mehrwert- oder Internetdienste und von dort zum Datenbankserver (10, 18) übertragen werden, wobei im Datenbankserver (10; 18) in Verbindung mit der Rufnummer des Teilnehmers permanent teilnehmerbezogene Daten gespeichert werden, die beim Aufbau einer Verbindung zu Mehrwert- oder Internetdiensten (2; 19) der teilnehmerbezogenen Adresse zugeteilt werden.

2. Verfahren nach Anspruch 1, **dadurch gekennzeichnet,**
**daß** beim Rufaufbau zwischen dem Teilnehmer und einem Mehrwert- oder Internetdienst eine den teilnehmerbezogenen Wirknetzinformationen zugeordnete Transaktions ID vergeben wird, und die teilnehmerbezogenen Wirknetzinformationen von einem Knoten (4) des Kommunikationsnetzes zusammen mit der Transaktions ID zum Datenbankserver (10; 18) übertragen oder von diesem anhand der Transaktions ID vom Netzknoten (4) angefordert werden, wobei die Transaktions ID als Extension der Zielrufnummer oder als separates Datenpaket an einen Zugangsknoten (9; 20) für Mehrwert- oder Internetdienste und von dort zum Datenbankserver (10; 18) übertragen wird.

3. Verfahren nach Anspruch 2, **dadurch gekennzeichnet, daß** die Wirknetzinformationen in dem Netzknoten (4) des Kommunikationsnetzes zusammen mit der Transaktions ID temporär zwischengespeichert werden.

4. Verfahren nach einem der Ansprüche 1 bis 3, **dadurch gekennzeichnet, daß** die Adresse dem Teilnehmer nur temporär für die Dauer einer Verbindung zu Mehrwert- oder Internetdiensten zugeteilt wird.

5. Verfahren nach einem der Ansprüche 1 bis 4, **dadurch gekennzeichnet, daß** die wirknetzinformationen nur temporär während der Dauer einer Verbindung zwischen Teilnehmer und Mehrwert- oder Internetdiensten im Datenbankserver (10; 18) gehalten werden.

6. Verfahren nach einem der Ansprüche 1 bis 5, **dadurch gekennzeichnet, daß** die Wirknetzinformationen eine Ortsinformation über den Aufenthaltsort des Teilnehmers enthalten.

7. Verfahren nach einem der Ansprüche 1 bis 6, **dadurch gekennzeichnet, daß** die Wirknetzinformationen eine Information über die Identität und Authentizität des Teilnehmers enthalten.

## Claims

1. Method for utilising in value-added or internet services subscriber-related active network information provided by a communications network in which the active network information is filed under a subscriber-related address in a database server (10; 18) communicating both with the communications network and with value-added or internet services (2; 19) and can be interrogated under this address by the value-added or internet services (2; 19), **characterised in that** in a network node (4) of the communications network conversion of active network information into parameters of the call-related protocols as well as of the protocols used in the value-added or internet services takes place, wherein the parameters either in the form of an extension of the destination dial number or in the form of data packets are transmitted transparently to an access node (9; 20) for value-added or internet services and from there to the database server (10, 18), wherein in the database server (10; 18) in association with the call number of the subscriber subscriber-related data are permanently stored which during set-up of a connection to value-added or internet services (2; 19) are assigned to the subscriber-related address.

2. Method according to claim 1, **characterised in that** during call set-up between the subscriber and a value-added or internet service a transaction ID assigned to the subscriber-related active network information is allocated and the subscriber-related active network information is transmitted from a node (4) of the communications network together with the transaction ID to the database server (10; 18) or requested by the latter from the network node (4) on the basis of the transaction ID, wherein the transaction ID is transmitted as an extension of the destination dial number or as a separate data packet to an access node (9; 20) for value-added or internet services and from there to the database server (10; 18).

3. Method according to claim 2, **characterised in that** the active network information is stored temporarily in the network node (4) of the communications network together with the transaction ID.

4. Method according to any of claims 1 to 3, **characterised in that** the address is allocated to the subscriber only temporarily for the duration of a connection to value-added or internet services.

5. Method according to any of claims 1 to 4, **characterised in that** the active network information is held in the database server (10; 18) only temporarily for the duration of a connection between the subscriber and value-added or internet services.

6. Method according to any of claims 1 to 5, **characterised in that** the active network information contains local information about the location of the subscriber.

7. Method according to any of claims 1 to 6, **characterised in that** the active network information contains information about the identity and authenticity of the subscriber.

## Revendications

1. Procédé pour l'utilisation d'informations de réseau actif relatives à l'abonné, fournies par un réseau de communication, dans des services à valeur ajoutée ou des services Internet, selon lequel les informations de réseau actif sont stockées à une adresse relative à l'abonné dans un serveur de banque de données (10 ; 18) qui communique à la fois avec le réseau de communication et avec des services à valeur ajoutée ou des services Internet (2 ; 19), et peuvent être interrogées à cette adresse par ces services (2 ; 19),
**caractérisé en ce que** dans un noeud de réseau (4) du réseau de communication a lieu une conversion des informations de réseau actif en paramètres des protocoles relatif à l'appel et des protocoles utilisés dans les services à valeur ajoutée ou les services Internet, les paramètres étant transmis de manière transparente soit comme extension du numéro d'appel d'arrivée, soit comme paquets de données, à un noeud d'accès (9 ; 20) pour des services à valeurs ajoutée ou des services Internet et, de là, au serveur de banque de données (10, 18), et des données relatives à l'abonné qui sont affectées à l'adresse relative à l'abonné lors de l'établissement d'une communication avec des services à valeur ajoutée ou des services Internet (2 ; 19) étant mises en mémoire en permanence dans le serveur de banque de données (10 ; 18) en liaison avec le numéro d'appel de l'abonné.

2. Procédé selon la revendication 1, **caractérisé en ce que** lors de l'établissement d'une communication entre l'abonné et un service à valeur ajoutée ou un service Internet, une identification ID de transaction affectée aux informations de réseau actif relatives à l'abonné est attribuée, et les informations de réseau actif relatives à l'abonné sont transmises par un noeud (4) du réseau de communication, avec l'ID de transaction, au serveur de banque de données (10 ; 18) ou sont demandées par celui-ci au noeud de réseau (4) à l'aide de l'ID de transaction, l'ID de transaction étant transmise comme extension du numéro d'appel d'arrivée ou comme paquet de données séparé à un noeud d'accès (9 ; 20) pour des services à valeur ajoutée ou des services Internet et, de là, transmise au serveur de banque de données (10 ; 18).

3. Procédé selon la revendication 2, **caractérisé en ce que** les informations de réseau actif sont stockées temporairement dans le noeud de réseau (4) du réseau de communication, avec l'ID de transaction.

4. Procédé selon l'une des revendications 1 à 3, **caractérisé en ce que** l'adresse n'est affectée à l'abonné que temporairement, pour la durée d'une liaison avec des services à valeur ajoutée ou des services Internet.

5. Procédé selon l'une des revendications 1 à 4, **caractérisé en ce que** les informations de réseau actif ne sont gardées dans le serveur de banque de données (10 ; 18) que temporairement, pendant la durée d'une liaison entre l'abonné et des services à valeur ajoutée ou des services Internet.

6. Procédé selon l'une des revendications 1 à 5, **caractérisé en ce que** les informations de réseau actif contiennent une information de lieu sur la position de l'abonné.

7. Procédé selon l'une des revendications 1 à 6, **caractérisé en ce que** les informations de réseau actif contiennent une information sur l'identité et l'authenticité de l'abonné.
